# EUROPÄISCHE PATENTANMELDUNG

(11) **EP 2 677 482 A1**
(43) Veröffentlichungstag der Anmeldung: **25.12.2013**
(21) Anmeldenummer: 13172886.7
(22) Anmeldetag: 19.06.2013
(51) Int. Cl.: G06Q 20/04, G06Q 20/32, G06Q 20/38

(54) **Verfahren zur Verarbeitung eines Papier-Zahlungsbelegs**

(30) Priorität: 20.06.2012 DE 102012105371
(71) Anmelder: Deutsche Postbank AG, 53113 Bonn (DE)
(72) Erfinder: Mehrens, Markus, 53129 Bonn (DE)
(74) Vertreter: Patentanwälte ter Smitten Eberlein Rütten Partnerschaftsgesellschaft

(57) **Zusammenfassung**

Die Erfindung bezieht sich auf ein Verfahren zur Verarbeitung eines Papier-Zahlungsbeleges (60), wobei der Zahlungsbeleg (60) eine Kontoinhaber-Unterschrift in einem Unterschriftfeld (61) und Geldtransfer-Daten zur Durchführung eines Geld-Transfers aufweist, mit
einem Smartphone (20) in einer öffentlichen Telekommunikations-Zone (14), wobei das Smartphone (20) ein Sende/Empfangsmodul (39) für eine drahtlose Verbindung zu einem mit einem öffentlichen Telekommunikations-Netz (80) verbundenen stationären Sende/Empfangsmodul (41), eine Kamera (32), ein Verschlüsselungsprogramm (34) und ein Applikationsprogramm (35) zur Steuerung der Erfassung und Weiterleitung des mit der Kamera (33) fotografierten Papier-Zahlungsbeleges (60) aufweist, und
einem über das Telekommunikations- Netz (80) mit dem stationären Sende/Empfangsmodul (41) verbundenen Bank-Rechner (40) in einer Bank-Zone (12), wobei der Bank-Rechner (40) eine Belegerfassungs-Steuerung (42), ein Texterkennungs-Programm (46), ein Entschlüsselungs- Programm (47) und eine Kontoinhaber-Datenbank (48) mit einem Datensatz mit Kontoinhaber-Kontodaten aufweist, mit
mit den Verfahrensschritten:
Fotografieren des Papier-Zahlungsbeleges (60) mit der Kamera (32), wobei ein digitales unverschlüsseltes Belegfoto (37) generiert wird,
Verschlüsseln des unverschlüsselten Belegfotos (37) durch das Verschlüsselungsprogramm (34) in ein verschlüsseltes Belegfoto (37'),
Übermitteln des verschlüsselten Belegfotos (37') durch das Applikationsprogramm (35) über das Smartphone- Sende/Empfangsmodul (39), das Telekommunikations- Netz (80) und das stationäre Sende/Empfangsmodul (41) an den Bank-Rechner (40),
Entschlüsseln des verschlüsselten Belegfotos (37') durch das Entschlüsselungsprogramm (47) in ein entschlüsseltes Belegfoto (37"),
Auslesen der Kontoinhaber-Daten und der Geldtransfer-Daten aus dem entschlüsselten Belegfoto (37") durch das Texterkennungs-Programm (46),
Verifizierung der ausgelesenen Kontoinhaber-Daten mit den in der Kontoinhaber-Datenbank (48) gespeicherten Kontoinhaber-Daten,
Abspeichern des Unterschrift-Feldes (61) des entschlüsselten Belegfotos (37") in dem Bank-Rechner (40), und
Auslösen eines Geldtransfers gemäß der ausgelesenen Geldtransfer-Daten.

## Beschreibung

Die Erfindung bezieht sich auf ein Verfahren zur Verarbeitung eines Papier-Zahlungsbelegs.

Ein Papier-Zahlungsbeleg ist beispielsweise ein papierner Scheck oder Überweisungsträger. In der Regel sind die Zahlungsbelege bereits maschinell teilweise ausgefüllt und müssen durch den Kontoinhaber manuell lediglich um seine Kontoverbindungs-Daten ergänzt, datiert und unterschrieben werden, was von vielen Kunden als einfach empfunden wird. Anschließend muss der papierne Zahlungsbeleg durch den Kunden an die Kontoinhaber-Bank körperlich zugestellt werden, was von Kunden eher als lästig empfunden wird. In der Bank wird der Zahlungsbeleg in der Regel maschinell erfasst, d.h. fotografiert bzw. gescannt, und aus dem so gewonnenen Foto bzw. Bild des Zahlungsbelegs der Inhalt durch ein Texterkennungs-Programm extrahiert. Relevante Inhalte sind insbesondere die Kontodaten des Kontoinhabers und die Geldtransfer-Daten, die den Transferbetrag und das Empfänger-Konto enthalten. Ferner kann die Kontoinhaber-Unterschrift des Zahlungsbeleges gegebenenfalls mit der in dem Bank-Rechner hinterlegten Referenz-Unterschrift des Kontoinhabers maschinell oder manuell verglichen werden. Anschließend wird ein Geldtransfer gemäß den Geldtransfer-Daten ausgelöst. Dieses Verfahren ist durch den so genannten Medienbruch für die Bank in der Handhabung relativ aufwändig.

Eine Alternative zu diesem Verfahren besteht darin, dass der Kontoinhaber an einem Terminal, beispielsweise an einem öffentlichen Bankterminal oder an seinem eigenen Computer zuhause, die eigenen Kontodaten und die Geldtransfer-Daten manuell eingibt, wobei er sich durch eine so genannte PIN-Authentifizierung authentifizieren und den Geldtransferdurch eine so genannte TAN-Authentifizierung freigeben muss. Dieses Verfahren ist für die Bank mit relativ wenig Aufwand verbunden, wird von vielen Kunden jedoch als für sie umständlich empfunden. Nicht selten müssen sich Kunden die PIN von verschiedenen Einrichtungen merken. Ein Verwechseln, Vergessen oder Verlust der PIN führt meist zu einer temporären Nichtnutzbarkeit der Online-Bankdienstleistung.

Ferner wird die manuelle Eingabe der Kontoinhaber-Daten und/oder der Geldtransfer-Daten von den Kunden oftmals als aufwendig empfunden. Zwar ist bekannt, dass die Eingabe der relevanten Geldtransfer-Daten auch mittels eines Texterkennungsprogramms erfolgen kann, jedoch ist hierzu erforderlich, dass ein solches Texterkennungsprogramm an dem Terminal oder dem Computer des Kunden installiert ist bzw. bereitgehalten wird. Die Nutzung und Pflege eines solchen Texterkennungsprogramms ist zumeist mit zusätzlichem Aufwand verbunden. Nach der Durchführung einer Texterkennung muss der Kunde stets selbst nochmals prüfen, ob die Ziffern und/oder Zahlen von dem Texterkennungsprogramm korrekt erkannt worden sind.

Für sogenannte Online-Dienste der Bank ist es darüber hinaus erforderlich, dass während des gesamten Zeitraums der Eingabe sowie Übermittlung der relevanten Geldtransfer-Daten von dem Kunden an die Bank eine sichere Datenverbindung zwischen dem Computer des Kunden und der Bank besteht. Dieser Zeitraum umfasst in der Regel mehrere Minuten. Insbesondere bei der Nutzung einer mobilen Datenverbindung, z.B. eine Drahtlos- oder Funkverbindung zwischen einem mobilen Computer oder Laptop des Kunden und der Bank, können Störungen in der Datenverbindung auftreten, so dass die Geldtransfer-Daten fehlerhaft oder gar nicht an die Bank übermittelt werden. In diesem Fall wird der Kunde aufgefordert, die Dateneingabe sowie die Übermittlung an die Bank zu wiederholen. Aufgabe der Erfindung ist es demgegenüber, ein Verfahren zur Auslösung eines Geldtransfers zu schaffen, das die vorgenannten Nachteile im Stand der Technik verringert und sowohl für die ausführende Bank als auch für den Kontoinhaber mit wenig Aufwand verbunden ist.

Diese Aufgabe wird erfindungsgemäß gelöst mit dem Verfahren mit den Merkmalen gemäß Patentanspruch 1.

Das erfindungsgemäße Geldtransfer-Verfahren beruht auf der Nutzung des Papier-Zahlungsbelegs, der durch den Kontoinhaber unterschrieben wird und in Form einer Bilddatei elektronisch von dem Kunden an die Bank übermittelt wird. Die Umwandlung in ein digitales Foto bzw. Bild erfolgt unmittelbar beim Kontoinhaber, und nicht erst innerhalb der Bank-Zone.

Hierzu verfügt der Kontoinhaber über ein so genanntes Smartphone, also ein Drahtlos- Telekommunikations- Gerät, das über eine Kamera verfügt. Das Smartphone verfügt ferner über ein Sende/Empfangsmodul für eine drahtlose Verbindung zu einem mit einem öffentlichen Telekommunikations- Netz verbundenen stationäre Sende/Empfangsmodul. Über diese drahtlose Verbindung kann das Smartphone Daten senden und empfangen, beispielsweise über eine Mobiltelefon-Verbindung. Das Smartphone weist für die Verarbeitung des Papier-Zahlungsbeleges ein Applikationsprogramm auf.

Das Applikationsprogramm steuert den gesamten Ablauf in dem Smartphone, der im Wesentlichen aus der Erfassung, der digitalen Verarbeitung und der Versendung des Papier-Zahlungsbelegs besteht. Hierzu verfügt das Smartphone über ein Verschlüsselungsprogramm, mit dem Fotos manipulationssicher und unlesbar verschlüsselt werden können. Auf der Seite der Kontoinhaber-Bank ist in einer sicheren Bank-Zone ein Bank- Rechner vorgesehen, der eine Belegerfassungs-Steuerung, ein Texterkennungs-Programm, ein Entschlüsselungs-Programm sowie eine Kontoinhaber-Datenbank mit einem Datensatz mit Kontodaten des Kontoinhabers aufweist. Die Bank-Zone ist über das öffentliche Telekommunikations-Netz mit dem stationären Sende-Empfangsmodul verbunden, wobei der Bank-Rechner durch eine so genannte Firewall und andere digitale Schutz-Maßnahmen von der öffentlichen Telekommunikations-Zone weitgehend isoliert ist.

Nach dem Starten des Applikationsprogramms auf dem Smartphone beginnt das erfindungsgemäße Verfahren zunächst mit dem Fotografieren des unterschriebenen Papier-Zahlungsbelegs mit der Smartphone-Kamera, wobei ein digitales und unverschlüsseltes Belegfoto erzeugt wird. Der Papier-Zahlungsbeleg kann vor Erzeugung des Belegfotos um die Kontodaten des Kontoinhabers manuell ergänzt, datiert und unterschrieben sein. In diesem Fall ist der Papier-Zahlungsbeleg vollständig ausgefüllt. Dadurch können die Kontoinhaber-Daten durch das Fotografieren erfasst und mit dem Belegfoto an die Bank übermittelt werden. Alternativ werden die Kontodaten des Kontoinhabers von dem bzw. durch das Applikationsprogramm automatisch ergänzt und/oder dem Belegfoto elektronisch beigefügt. Das Applikationsprogramm veranlasst anschließend das Verschlüsselungsprogramm, das Belegfoto in ein verschlüsseltes Belegfoto umzuwandeln, das nicht mehr ohne weiteres lesbar oder manipulierbar ist.

Anschließend wird das verschlüsselte Belegfoto durch das Applikationsprogramm über das Smartphone- Sende/Empfangsmodul innerhalb des öffentlichen Telekommunikations-Netzes drahtlos an das stationäre Sende/Empfangsmodul gesendet, von wo aus es zu dem Bank-Rechner geschickt wird.

In dem Bank-Rechner veranlaßt die Belegerfassungs-Steuerung das Entschlüsselungs-Programm dazu, das verschlüsselte Belegfoto in ein entschlüsselten Belegfoto zu entschlüsseln. Die Belegerfassungs-Steuerung veranlasst anschließend das Texterkennungs-Programm dazu, die Kontoinhaber-Daten und die Geldtransfer-Daten aus dem entschlüsselten Belegfoto auszulesen und in Zeichencodes umzuwandeln. Anschließend können die ausgelesenen Kontoinhaber-Daten und Geldtransfer-Daten auf Plausibilität geprüft werden. Ferner werden die ausgelesenen Kontoinhaber-Daten mit Hilfe der in der Kontoinhaber-Datenbank gespeicherten Kontoinhaber- Kontodaten verifiziert. Wenn die Verifizierung positiv ausfällt, wird der Geldtransfer gemäß den ausgelesenen Geldtransfer-Daten ausgelöst. Ferner wird mindestens das Unterschrift-Feld des entschlüsselten Belegfotos in dem Bank-Rechner abgespeichert und für die gesetzlich dafür vorgesehene Dauer nicht gelöscht.

Eine Authentifizierung des auf diese Weise veranlassten Geldtransfers durch Eingabe einer PIN und/oder TAN ist nicht erforderlich, da die rechtlich ausreichende Autorisierung durch die Unterschrift des Kontoinhabers in dem Unterschriftfeld des Papier-Zahlungsbelegs erfolgt ist. Hierdurch wird das Auslösen eines zunächst papiergestützten Geld-Transfers für den Kontoinhaber sehr einfach, da nach der Ergänzung der Kontodaten, der Datierung und der Unterzeichnung des Papier-Zahlungsbeleges die körperliche Überbringung des Papier-Zahlungsbeleges zu der Kontoinhaber-Bank vollständig entfällt. Die bildliche digitale Erfassung des Papier-Zahlungsbelegs kann durch den Kontoinhaber mit seinem Smartphone im Prinzip an jedem beliebigen Ort vorgenommen werden. Dadurch, dass die inhaltliche Weiterverarbeitung erst in dem Bank-Rechner innerhalb der sicheren Bank-Zone erfolgt, sind in der Regel keine weiteren Authorisierungsschritte, wie beispielsweise die Eingabe einer PIN oder TAN, mehr erforderlich. Daher gestaltet sich das beschriebene Verfahren für den Kontoinhaber in der Handhabung sehr einfach und bequem.

Auf der Seite der Kontoinhaber-Bank sind die Hardware und die Software zur Verarbeitung eines Belegfotos schon vorhanden, da Papier-Zahlungsbelege schon seit vielen Jahren nach ihrer Einlieferung bei der Bank zunächst fotografiert und anschließend durch eine Texterkennung weiter verarbeitet werden. Der zusätzliche Aufwand für Hardware und Software für die Einrichtung des hier beschriebenen Verfahrens fällt also für die Bank relativ gering aus. Die Texterkennung kann mittels eines einzigen Texterkennungsprogramms zentral bei der Bank erfolgen. Es ist nicht erforderlich, dass auf dem Computer oder Endgerät des Kunden jeweils ein Texterkennungsprogramm bereitgehalten wird. Dies bedeutet weniger Aufwand für den Kunden. Ferner können Programmverbesserungen oder sogenannte Updates schnell und einfach zu dem Texterkennungsprogramm der Bank hinzugefügt werden, so dass für alle Kunden der Bank dauerhaft eine sichere Texterkennung gewährleistet werden kann. Das Einpflegen einer Programmverbesserung an jedem einzelnen Endgerät entfällt. Ferner ist es möglich, dass Änderungen oder Formabweichungen der Papier-Zahlungsbelege, zum Beispiel in der Feld- oder Eingabestruktur, schnell und einfach in das Texterkennungsprogramm eingepflegt werden können. Somit kann das Texterkennungsprogramm einfach und schnell die Daten verschiedener Papier-Zahlungsbelege erfassen. Zudem wird das Texterkennungsprogramm innerhalb des gesicherten Bankbereichs angewendet, so dass ein Zugriff oder eine Manipulation des Textes nicht oder nur sehr schwer möglich ist. Gleichzeitig entfällt auf der Bankseite die Handhabung von PIN und TAN. Damit ist ein Verfahren geschaffen, das sowohl für den Kontoinhaber als auch für die Kontoinhaber-Bank einfach und unkompliziert in der Handhabung ist, und nur mit relativ geringem technischen Mehraufwand auf der Bankseite verbunden ist.

Vorzugsweise wird das unverschlüsselte Belegfoto, und besonders bevorzugt auch das verschlüsselte Belegfoto, nach der Übermittlung des verschlüsselten Belegfotos vollständig in dem Smartphone gelöscht. Besonders bevorzugt wird das Belegfoto vollständig physikalisch gelöscht, d.h. der gesamte von dem Belegfoto zuvor belegte Speicherraum wird vollständig überschrieben. Hierdurch wird verhindert, dass das verschlüsselte bzw. das unverschlüsselte Belegfoto für betrügerische Zwecke missbraucht werden kann.

Vorzugsweise wird durch das Applikationsprogramm in dem Smartphone nach dem Fotografieren des Zahlungsbelegs zunächst eine Prüfung der fotografischen Qualität des Belegfotos veranlasst. Die Überprüfung bezieht sich insbesondere auf die Auflösung, mit der der Zahlungsbeleg in dem Belegfoto aufgelöst ist. Die Auflösung ist gegebenenfalls nur dann ausreichend, wenn der Papier-Zahlungsbeleg mit der Smartphone- Kamera aus einer nicht zu großen Entfernung fotografiert wurde. Ferner wird gegebenenfalls die Bildschärfe überprüft. Schließlich können weitere Parameter des Belegfotos überprüft werden, beispielsweise die Verzerrung der Darstellung des Zahlungsbelegs in dem Belegfoto, der Kontrast, die Helligkeit, die Farbqualität et cetera. Die Überprüfung der fotografischen Qualität des Belegfotos ist deshalb von großer Wichtigkeit, weil nur eine ausreichende Qualität des Belegfotos sicherstellt, dass das Texterkennungs-Programm in dem Bank-Rechner aus dem Belegfoto zuverlässig und fehlerfrei die Geldtransfer-Daten und die Kontodaten auslesen kann. Wenn die fotografische Qualität des Belegfotos ausreichend ist, leitet das Applikationsprogramm das Belegfoto weiter zur Verschlüsselung und zur Übermittlung des Belegfotos. Wenn die fotografische Qualität des Belegfotos nicht ausreichend ist, fordert das Applikationsprogramm den Kontoinhaber- gegebenenfalls auf, den Papier-Zahlungsbeleg erneut zu fotografieren.

Gemäß einer bevorzugten Ausgestaltung ist vorgesehen, dass nach dem Fotografieren des Papier-Zahlungsbelegs und Erzeugen einer Bilddatei dem Belegfoto bzw. der Bilddatei zusätzlich die relevanten Kontoinhaber-Daten angehängt oder beigefügt werden. Dadurch kann die Bilddatei einem Kontoinhaber eindeutig zugeordnet werden. Die Kontoinhaber-Daten sind vorzugsweise verschlüsselt an die Bilddatei angehängt. Das Anhängen der relevanten Kontoinhaber-Daten an die Bilddatei erfolgt vorzugsweise durch das Applikationsprogramm. Hierzu werden die Kontoinhaber-Daten bevorzugt einmal vom Kontoinhaber in das Applikationsprogramm eingegeben und von der Bank verifiziert. Das Applikationsprogramm kann die Kontoinhaber-Daten vorzugsweise speichern, abrufen und einer entsprechenden Bilddatei anhängen. Das Anhängen der Kontoinhaber-Daten an die Bilddatei erfolgt beispielsweise durch Zuweisen eines entsprechenden Dateinamens, Hinzufügen eines entsprechenden zusätzlichen Bildabschnitts oder Anfügen von entsprechenden Metadaten an die Bilddatei. Somit können die relevanten Kontoinhaber-Daten einfach und schnell bei jedem Geldtransfer-Auftrag durch das Applikationsprogramm abgerufen und der Bilddatei hinzugefügt werden. Ein manuelles Ausfüllen des Papier-Zahlungsbeleges vor dem Fotografieren oder die manuelle Eingabe der Kontoinhaber-Daten des Kunden, insbesondere Kontonummer und Bankleitzahl, ist in diesem Fall nicht erforderlich. Auch eine Authentifizierung des Kontoinhabers mittels der der Bilddatei beigefügten Kontoinhaber-Daten ist somit möglich.

Die Übermittlung des verschlüsselten Belegfotos und der hieran angehängten Kontoinhaber-Daten erfolgt vorzugsweise in einer einzigen Datei bzw. in einem gemeinsamen Datenpaket. Dadurch kann die Übermittlung in einem relativ kurzen Zeitraum erfolgen, so dass eine Aufrechterhaltung einer langandauernden Datenverbindung zwischen dem Computer des Kunden und der Bank nicht erforderlich ist. Ferner kann die Übermittlung des Belegfotos zu einem von dem Kunden bestimmten Zeitpunkt erfolgen. Dadurch ist es möglich, dass das Belegfoto zu einem Zeitpunkt, zu dem keine Datenverbindung zur Bank besteht, erstellt und verschlüsselt wird und zu einem späteren Zeitpunkt, zu dem eine solche Datenverbindung besteht, an die Bank übermittelt wird. Vorzugsweise ist die Bilddatei vollständig verschlüsselt. Dadurch ist für die Übermittlung der Bilddatei von dem Computer des Kunden zu der Bank eine besondere bzw. sichere Datenverbindung nicht erforderlich.

Vorzugsweise ist in dem Bank-Rechner vor dem Auslösen des Geldtransfers vorgesehen, die Unterschrift des Unterschrift-Feldes aus dem entschlüsselten Belegfoto mit Hilfe einer in der Kontoinhaber-Datenbank gespeicherten Kontoinhaber-Unterschrift zu vergleichen und zu verifizieren. Das Vergleichen und Verifizieren der Unterschriften erfolgt durch ein Unterschriftvergleichs-Programm in dem Bank-Rechner. Das Vergleichen und Verifizieren kann automatisch, halbautomatisch oder mit manueller Unterstützung erfolgen.

Gemäß einer bevorzugten Ausgestaltung ist vorgesehen, dass das Smartphone eine einmalige Smartphone- Kennung aufweist, die auch in der Kontoinhaber-Datenbank gespeichert ist. Unter einer Smartphone-Kennung ist vorliegend nicht zwangsweise eine Kennung zu verstehen, die an die Hardware des Smartphones gebunden ist. Eine Smartphone-Kennung kann vorliegend auch die dem Smartphone zugeordnete Mobiltelefon- Rufnummer sein, die auf einer eingesetzten und austauschbaren Mobilfunk-Chipkarte gespeichert ist. Alternativ oder ergänzend kann die Smartphone- Kennung jedoch auch eine Hardware-Kennung des Smartphones selbst sein. In jedem Fall sollte die Smartphone- Kennung unmanipulierbar und für das Applikationsprogramm einfach zugänglich sein, so dass die Smartphone- Kennung zusammen mit dem verschlüsselten Belegfoto von dem Smartphone über das öffentliche Telekommunikations-Netz zu dem Bank-Rechner gesendet werden kann.

Nach der Übermittlung des verschlüsselten Belegfotos zusammen mit der Smartphone- Kennung an den Bank-Rechner wird durch den Bank-Rechner bzw. die Belegerfassungs-Steuerung der dazugehörende Kontoinhaber-Datensatz in der Kontoinhaber-Datenbank identifiziert. Die Übersendung und Überprüfung der Smartphone- Kennung ist ein zusätzliches Sicherheitsmerkmal dieses Verfahrens, das die Sicherheit gegen Missbrauch erhöht und die Verwendung von PIN und TAN entbehrlich macht.

Gemäß einer bevorzugten Ausgestaltung versendet beim Auslösen eines Geldtransfers der Bank-Rechner an das Smartphone eine Bestätigungsnachricht, in der die Ausführung des Geldtransfers bestätigt wird.

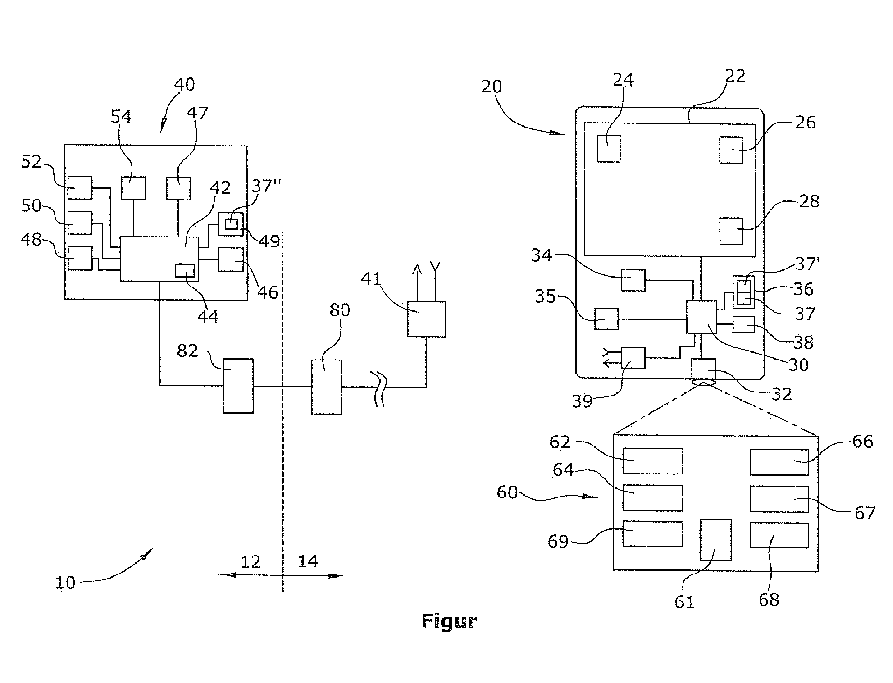

Im Folgenden wird unter Bezugnahme auf die Figur ein Ausführungsbeispiel des erfindungsgemäßen Verfahrens näher erläutert.

Die Figur zeigt eine Anordnung mit einem Papier-Zahlungsbeleg, einem Smartphone und einem Bank-Rechner zur Durchführung eines Verfahrens zur Verarbeitung eines Papier-Zahlungsbelegs.

In der Figur ist eine Anordnung 10 dargestellt, die alle wesentlichen Elemente enthält, die an einem Verfahren zur Verarbeitung eines Papier-Zahlungsbelegs beteiligt sind. Diese Elemente sind im Wesentlichen ein Papier-Zahlungsbeleg 60, ein Smartphone 20 und ein Bank-Rechner 40.

Der Papier-Zahlungsbeleg 60 ist ein standardisierter papierner Überweisungsträger, der eine Reihe von Feldern aufweist. Die Kontodaten des Kontoinhabers stehen in einem Kontoinhabernamens-Feld 62 und in einem Kontoinhaber-Kontonummern-Feld 64. Die Geldtransfer-Daten stehen in einem Transferbetrag-Feld 66, in dem der Transferbetrag steht, einem Textfeld 69, in das beispielsweise eine Rechnungsnummer eingetragen sein kann, einen Empfängernamens-Feld 67, in dem der Empfängername steht und einem Empfängerkonto-Feld, in dem die eindeutige Kontonummer des Geldtransfer-Empfängers steht. Gegebenenfalls können auch noch weitere Felder für die eindeutige Identifizierung des Kontoinhaber-Kontos und des Geldtransfer-Empfängerkontos vorgesehen sein, insbesondere Felder für die betreffenden Bankleitzahlen, wenn diese nicht in der Kontonummer enthalten sind.

Das Smartphone 20 weist als Hardware insbesondere ein berührungsempfindliches Touchscreen-Display 22, eine Smartphone-Steuerung 30, eine Kamera 32, ein Sende/Empfangsmodul 39 sowie einen oder mehrere digitale Speicher 44,49 auf, die als Zwischenspeicher für das unverschlüsselte Belegfoto 37 bzw. das verschlüsselte Belegfoto 37' dienen. In einem nichtflüchtigen Speicher sind als Software ein Applikationsprogramm 35, ein Verschlüsselungs-Programm 34 und ein Fotoqualitäts- Prüfprogramm 38 gespeichert. Bei Betrieb des Applikationsprogramms kann dieses über die Smartphone- Steuerung 30 auf dem Display 22 ggf. eine Applikations-Starttaste 24, eine Kamera-Auslösertaste 26 und/oder einen Sendetaste 28 darstellen und aktivieren.

Die Anordnung 10 ist bezüglich der Datensicherheit eingeteilt in eine potentiell unsichere öffentliche Zone 14 einerseits und in eine sichere Bank-Zone 12 andererseits. In der öffentlichen Zone 14 ist neben dem Papier-Zahlungsbeleg 60 und dem Smartphone 20 ferner ein stationäres Sende/Empfangsmodul 41 angeordnet. Das stationäre Sende/Empfangsmodul 41 ist angeschlossen an ein öffentliches Telekommunikationsnetz 80, das beispielsweise ein Mobilfunknetz, ein Datennetz, das Internet oder ein anderes öffentliches Netz zur Übertragung digitaler Daten sein kann. Bevorzugt handelt es sich hierbei jedoch um ein Mobilfunknetz.

Am Daten- Zugang zu der Bank-Zone 12 ist im Einflussbereich der Bank eine so genannte Firewall 82 vorgesehen, die einen Bank-Rechner 40 innerhalb der Bank-Zone 12 gegen einen unbefugten Zugriff aus der öffentlichen Zone 14 schützt. Der Bank-Rechner 40 weist als Hardware eine Rechnersteuerung 42, einen flüchtigen Foto-Zwischenspeicher 49 und einen nicht-flüchtigen Belegfoto-Speicher 44 auf. In entsprechenden Datenspeichern sind ferner als Software ein Texterkennungs-Programm 46, ein Entschlüsselungs-Programm 47, eine Transfersteuerung 54, ein Mail-Generator 52, ein Unterschriftenvergleichs -Programm 50 und eine Kontoinhaber-Datenbank 48 vorgesehen.

Das Verfahren zur Verarbeitung des Papier-Zahlungsbeiegs 60 läuft wie folgt ab:
Vor der erstmaligen Anwendung lädt sich der Kontoinhaber das Applikationsprogramm 35 auf sein Smartphone 20, in dem es dauerhaft gespeichert wird. Mit Hilfe des Applikationsprogramms 35 meldet der Kontoinhaber den Dienst "Smartphone- Überweisung" bei seiner Bank an, die dies in den betreffenden Kontodaten in der Kontoinhaber-Datenbank 48 speichert. Insbesondere wird hierbei auch eine Smartphone- Kennung gespeichert, beispielsweise die Mobiltelefonnummer des betreffenden Smartphones 20 des Kontoinhabers. Gegebenenfalls muss die Smartphone- Überweisung durch den Kontoinhaber persönlich in einer Bankfiliale der Kontoinhaber-Bank verifiziert werden.

Wenn der Kontoinhaber einen Papier-Zahlungsbeleg 60 erhält, beispielsweise einen mit den Geldtransfer-Daten bereits ausgefüllten Papier-Überweisungsträger, füllt er manuell in das Kontoinhabernamen-Feld 62 seinen vollständigen Namen und in das Kontoinhaber-Kontonummern-Feld 64 seine Kontonummer ein, wobei gegebenenfalls in einem zweiten Kontoinhaber-Kontonummern-Feld die betreffende Bankleitzahl eingetragen wird. Schließlich datiert und unterschreibt der Kontoinhaber in dem Unterschrift-Feld 61 den Papier-Zahlungsbeleg 60. Nun ist der Papier-Zahlungsbeleg 60 im rechtlichen Sinne vollständig ausgefüllt, so dass auf dieser Grundlage eine entsprechende Überweisung ausgeführt werden kann.

Der Kontoinhaber startet auf seinem Smartphone über die Applikations-Starttaste 24 das Überweisungs- Applikationsprogramm 35. Nach dem Start des Applikationsprogramms 35 schaltet dieses die Fotofunktion des Smartphones 20 ein, stellt auf dem Display 22 eine Kamera-Auslösertaste 26 dar und aktiviert die Smartphone- Kamera 32. Der Kontoinhaber fotografiert durch Drücken der Kamera- Auslösertaste 26 den ausgefüllten Papier-Zahlungsbeleg 60, der anschließend für eine visuelle Kontrolle auf dem Smartphone- Display 22 angezeigt und als Belegfoto 37 in dem Foto-Zwischenspeicher 36 des Smartphones 20 gespeichert wird. Anschließend ruft die Smartphone- Steuerung 30 das Fotoqualitäts- Prüfungsprogramm 38 auf, das die Fotoqualität des Belegfotos 27 prüft. Hierbei werden insbesondere die Auflösung des Zahlungsbelegs in dem Belegfoto, die Bildschärfe und der Bildkontrast geprüft. Wenn die fotografische Qualität des Belegfotos 37 nicht ausreichend ist, wird der Kontoinhaber über das Display 22 aufgefordert, den Papier-Zahlungsbeleg 60 erneut zu fotografieren. Wenn die fotografische Qualität des Belegfotos 37 ausreichend ist, ruft die Smartphone- Steuerung 30 das Verschlüsselungs-Programm 34 auf, das das Belegfoto 37 in ein verschlüsseltes Belegfoto 37' verschlüsselt bzw. umwandelt.

Sobald das verschlüsselte Belegfoto 37' fertig gestellt ist, erscheint auf dem Display 22 eine Sendetaste 28, durch deren Betätigung der Kontoinhaber das Absenden des verschlüsselten Belegfotos 37' auslöst. Die Smartphone- Steuerung 30 übergibt das verschlüsselte Belegfoto 37' zusammen mit der Smartphone- Kennung an das Smartphone-Sende/Empfangsmodul 39, das diese Daten über das öffentliche Mobiltelefonnetz drahtlos an ein stationäres Sende/Empfangsmodul 41 sendet. Über das stationäre terrestrische Sender/Empfangsmodul 41 und das Telekommunikations- Netz 80 gelangt das verschlüsselte Belegfoto 37' einschließlich der Smartphone- Kennung durch die Firewall 82 zu dem Bank-Rechner 40, beispielsweise in Form einer sog. MMS.

In dem Bankrechner 40 wird das verschlüsselte Belegfoto 37' zunächst in einem Belegfoto-Zwischenspeicher 49 abgelegt. Anschließend wird das Entschlüsselungs-Programm 47 gestartet und wird das verschlüsselte Belegfoto 37' entschlüsselt und als entschlüsselten Belegfoto 37" in dem Foto-Zwischenspeicher 49 gespeichert. Das entschlüsselte Belegfoto 37" wird nun durch ein Texterkennungs-Programm 46 verarbeitet, das alle Felder des Papier-Zahlungsbelegs 60 aus dem entschlüsselten Belegfoto 37" ausliest und in einen String mit mehreren Zeichencode-Feldern umwandelt. Nur das Unterschriftfeld 61 wird nicht auf diese Weise verarbeitet. Aus den Zeichencode-Feldern gehen die Kontodaten des Kontoinhabers und die Geldtransfer-Daten hervor. Mit Hilfe in der empfangenen Smartphone- Kennung und der ermittelten Kontodaten wird in der Kontoinhaber-Datenbank 48 der betreffende Datensatz des Kontoinhabers aufgerufen, und mit den empfangenen und ermittelten Daten abgeglichen.

Das Unterschriftsfeld 61 aus dem entschlüsselten Belegfoto 37" wird nun an das Unterschriftvergleichs-Programm 50 geschickt, das die Unterschrift des Unterschriftfeldes 61 mit der in der Kontoinhaber-Datenbank 48 hinterlegten Unterschrift maschinell vergleicht. Bei einem positiv ausfallenden Unterschriftsvergleich instruiert die Steuerung 42 die Transfer-Steuerung 54, einen entsprechenden Geld-Transfer über den Transferbetrag durchzuführen. Ferner veranlasst die Steuerung 42 den Mail-Generator 52 dazu, eine Bestätigungs-Nachricht per SMS an das Smartphone 20 zu senden.

Schließlich veranlasst die Steuerung 42 eine dauerhafte Abspeicherung des entschlüsselten Belegfotos 37" mindestens für die gesetzlich hierfür vorgesehene Dauer in dem Belegfoto-Speicher 44.

## Patentansprüche

1. Verfahren zur Verarbeitung eines Papier-Zahlungsbeleges (60), wobei der Zahlungsbeleg (60) eine Kontoinhaber-Unterschrift in einem Unterschriftfeld (61) und Geldtransfer-Daten zur Durchführung eines Geld-Transfers aufweist, mit
einem Smartphone (20) in einer öffentlichen Telekommunikations-Zone (14), wobei das Smartphone (20) ein Sende/Empfangsmodul (39) für eine drahtlose Verbindung zu einem mit einem öffentlichen Telekommunikations-Netz (80) verbundenen stationären Sende/Empfangsmodul (41), eine Kamera (32), ein Verschlüsselungsprogramm (34) und ein Applikationsprogramm (35) zur Steuerung der Erfassung und Weiterleitung des mit der Kamera (33) fotografierten Papier-Zahlungsbeleges (60) aufweist, und einem über das Telekommunikations- Netz (80) mit dem stationären Sende/Empfangsmodul (41) verbundenen Bank-Rechner (40) in einer Bank-Zone (12), wobei der Bank-Rechner (40) eine Belegerfassungs-Steuerung (42), ein Texterkennungs-Programm (46), ein Entschlüsselungs- Programm (47) und eine Kontoinhaber-Datenbank (48) mit einem Datensatz mit Kontoinhaber-Kontodaten aufweist, mit
mit den Verfahrensschritten:
Fotografieren des Papier-Zahlungsbeleges (60) mit der Kamera (32), wobei ein digitales unverschlüsseltes Belegfoto (37) generiert wird, Verschlüsseln des unverschlüsselten Belegfotos (37) durch das Verschlüsselungsprogramm (34) in ein verschlüsseltes Belegfoto (37'),
Übermitteln des verschlüsselten Belegfotos (37') durch das Applikationsprogramm (35) über das Smartphone-Sende/Empfangsmodul (39), das Telekommunikations- Netz (80) und das stationäre Sende/Empfangsmodul (41) an den Bank-Rechner (40),
Entschlüsseln des verschlüsselten Belegfotos (37') durch das Entschlüsselungsprogramm (47) in ein entschlüsselten Belegfoto (37"),
Auslesen der Kontoinhaber-Daten und der Geldtransfer-Daten aus dem entschlüsselten Belegfoto (37") durch das Texterkennungs-Programm (46),
Verifizierung der ausgelesenen Kontoinhaber-Daten mit den in der Kontoinhaber-Datenbank (48) gespeicherten Kontoinhaber-Daten,
Abspeichern des Unterschrift-Feldes (61) des entschlüsselten Balagfiotos (37") in dem Bank-Rechner (40), und
Auslösen eines Galdtransfiars gemäß der ausgelesenen Geldtransfer-Daten.

2. Verfahren zur Verarbeitung eines Papier-Zahlungsbeleges (60) nach Anspruch 1, mit dem Verfahrensschritt:
Nach dem Übermitteln des verschlüsselten Belegfiotos (37'): Löschen des unverschlüsselten Belegfotos (37) und des verschlüsselten Belegfotos (37') in dem Smartphone (20).

3. Verfahren zur Verarbeitung eines Papier-Zahlungsbeleges (60) nach einem der vorangegangenen Ansprüche, mit dem Verfahrensschritt:
Nach dem Fotografieren des Zahlungsbelegs (60): Prüfen der fotografischen Qualität des Belegfotos (37) durch das Applikationsprogramm (35).

4. Verfahren zur Verarbeitung eines Papier-Zahlungsbeleges (60) nach einem der vorangegangenen Ansprüche, mit dem Verfahrensschritt:
Nach dem Fotografieren des Zahlungsbelegs (60): Hinzufügen von Kontoinhaber-Daten zu dem Belegfoto (37) durch das Applikationsprogramm (35).

5. Verfahren zur Verarbeitung eines Papier-Zahlungsbeleges (60) nach einem der vorangegangenen Ansprüche, mit dem Verfahrensschritt:
Vor dem Auslösen des Geldtransfers: Vergleichen und Verifizieren der Unterschrift des Unterschrift-Feldes aus dem entschlüsselten Belegfoto (37") mit Hilfe einer in der Kontoinhaber-Datenbank (48) gespeicherten Kontoinhaber-Unterschrift durch ein Unterschriftvergleichs- Programm (50) in dem Bank-Rechner (40).

6. Verfahren zur Verarbeitung eines Papier-Zahlungsbeleges (60) nach einem der vorangegangenen Ansprüche, wobei das Smartphone (20) eine einmalige Smartphone- Kennung aufweist, die in der Kontoinhaber-Datenbank (48) als gespeichert ist, mit den Verfahrensschritten:
Übermitteln der Smartphone- Kennung zusammen mit dem verschlüsselten Belegfoto (37') an den Bank-Rechner (40), und Identifizierung des Kontoinhaber- Datensatzes in der Kontoinhaber-Datenbank (48) anhand der übermittelten Smartphone- Kennung.

7. Verfahren zur Verarbeitung eines Papier-Zahlungsbeleges (60) nach einem der vorangegangenen Ansprüche, mit dem Verfahrensschritt:
Beim Auslösen eines Geldtransfers: Versenden einer Bestätigungs-Nachricht durch den Bank-Rechner (40) an das Smartphone (20).
